# EUROPÄISCHE PATENTSCHRIFT

(11) **EP 2 086 773 B1**
(45) Veröffentlichungstag und Bekanntmachung des Hinweises auf die Patenterteilung: **07.04.2010**
(21) Anmeldenummer: 07815183.4
(22) Anmeldetag: 15.11.2007
(51) Int. Cl.: B60C 27/10

(54) **SPANNSCHLOSS FÜR EINE GLEITSCHUTZKETTE**
TURNBUCKLE FOR A NON-SKID CHAIN
TENDEUR POUR UNE CHAÎNE ANTIDÉRAPANTE

(30) Priorität: 17.11.2006 AT 19072006; 02.08.2007 AT 12182007; 05.11.2007 AT 17772007
(43) Veröffentlichungstag der Anmeldung: 12.08.2009
(73) Patentinhaber: Pewag Schneeketten GMBH & Co KG, 8020 Graz (AT)
(72) Erfinder: ÄGYD, Pengg, 9020 Klagenfurt (AT)
(74) Vertreter: Patentanwaltskanzlei Matschnig & Forsthuber OG
(86) Internationale Anmeldenummer: PCT/AT2007/000517
(87) Internationale Veröffentlichungsnummer: WO 2008/058304

(56) Entgegenhaltungen:
- EP-A- 0 489 996
- DE-A1- 2 608 190
- JP-A- 2 057 411

## Beschreibung

Die Erfindung bezieht sich auf ein Spannschloss zum Fixieren zweier drahtförmiger Endabschnitte eines ein Zugelement aufweisenden Seitenstranges einer Gleitschutzkette für ein Rad eines Fahrzeuges, mit einem Gehäuse, in welchem zumindest ein bewegbares Haltestück untergebracht ist, wobei der zumindest eines drahtförmigen Endabschnitt mittels des zumindest einen Haltestücks vorübergehend fixierbar ist.

Ein Spannschloss dieser Art ist beispielsweise in der DE 26 08 190 A1 beschrieben, wobei der Seitenstrang aus einer Schraubenfeder und einem durch diese geführten Spanndraht besteht. Ein Ende des Spanndrahtes ist an dem Gehäuse eines Spannschlosses befestigt, wogegen das andere Drahtende durch das Gehäuse und eine oder zwei, in dem Gehäuse verkippbar gelagerte Scheiben mit konischen Bohrungen läuft. Die Scheiben sind durch eine Gummifeder so gegen eine innere Gehäusekante gedrückt, dass sie gegenüber dem Draht verkanten und diesen dadurch bezüglich des Gehäuses festklemmen. Durch ein händisch betätigbares Entriegelungsorgan können die Scheiben in eine Stellung gebracht werden, in der sie bezüglich des Stahldrahtes nicht verkantet sind, sodass letzterer dadurch freigegeben ist.

In der EP 0 489 996 A1 ist eine Gleitschutzkette beschrieben, deren Verschluss einen Haken enthält, der unter Wirkung der Fliehkraft bei Drehung des Rads nach außen gedrückt wird, was ein Auslösen des Hakens verhindern kann.

Eine Aufgabe der Erfindung liegt in der Schaffung eines Spannschlosses, welches zum Lösen nicht manuell betätigt werden muss, und das einen dem rauen Betrieb entsprechend robusten und einfachen Aufbau besitzt.

Diese Aufgabe wird mit einem Spannschloss der eingangs genannten Art gelöst, bei welchem erfindungsgemäß in dem Gehäuse ein bewegbares Massestück angeordnet ist, welches aus einer bei Stillstand des Rades vorliegenden Ruhestellung unter Einwirkung der Fliehkraft bei Rotation des Rades zumindest abschnittsweise radial nach außen bewegt wird, und diese Bewegung ein Blockieren des zumindest einen Endabschnittes des Zugelementes bewirkt

Dank der Erfindung erfolgt ab einer gewissen Drehzahl des Rades bzw. Geschwindigkeit des Fahrzeuges ein Verklemmen des Endabschnittes und dadurch wird ein sicherer Halt der Gleitschutzkette an dem Reifen gewährleistet, ohne dass die Montage der Kette hierdurch erschwert würde.

Ein sehr gutes Blockieren des Spannstranges lässt sich dadurch erzielen, dass ein Endabschnitt des Zugelementes durch das Gehäuse und einen Durchlass des zumindest einen Haltestücks geführt ist, wobei eine verkantende Bewegung des Haltestücks bezüglich des zumindest einen drahtförmigen Endabschnittes dessen vorübergehendes Fixieren zur Folge hat.

In der Praxis hat sich eine Ausführung als mit einfachen Mitteln realisierbar erwiesen, bei welcher das Massestück exzentrisch um eine Achse schwenkbar gelagert ist. Eine derartige Ausgestaltung gestattet einen weiten Variationsbereich der auf den Endabschnitt aufzubringenden Klemmkräfte. In diesem Sinne ist es auch besonders vorteilhaft, wenn das Massestück als Winkelhebel mit ungleich langen Schenkeln ausgebildet ist, wobei der längere Schenkel annähernd tangential innerhalb des Gehäuses verläuft und der kürzere, als Haltestück ausgebildete Schenkel zumindest einen Durchlass für den zumindest einen Endabschnitt aufweist. Dabei können die Schenkel über eine im wesentlichen normal zur Radachse liegende Platte miteinander verbunden sein, um die Steifigkeit zu erhöhen.

Um einen definierten Ruhezustand, in welchem das Spannschloss "offen" ist, unabhängig von der Radstellung zu erhalten, kann es vorteilhaft sein, wenn das Massestück in seiner Ruhelage federbelastet ist.

Bei einer weiteren Variante ist vorgesehen, dass in dem Gehäuse ein von dem schwenkbaren Massestück gesondertes Haltestück schwenkbar gelagert und kinematisch mit dem Massestück so verbunden ist, dass ein Verschwenken des Massestücks aus seiner Ruhelage zu einem Verschwenken des gesonderten Haltestücks aus dessen Ruhelage und damit zu der verkantenden Bewegung bezüglich des zumindest einen Endabschnittes des Zugelementes führt. Bei dieser Variante ergibt sich ein noch größerer Spielraum bezüglich der auf den Endabschnitt wirkenden Kräfte.

Eine besonders gute Führung des Endabschnittes sowie ein sicheres Festklemmen ist gewährleistet, falls der zumindest eine Endabschnitt des Zugelementes in einer Durchgangsbohrung des Haltestücks geführt ist

Andererseits erleichtert eine Ausführungsform die Montage des Spannschlosses, bei welcher der zumindest eine Endabschnitt des Zugelementes in einer zu einem Rand des Haltestücks hin offenen Nut geführt ist.

Eine vorteilhafte Ausführung zeichnet sich dadurch aus, dass einer der beiden Endabschnitte des Zugelementes an dem Gehäuse fixiert und der andere Endabschnitt durch das Gehäuse und das Haltestück geführt ist. Hier ist der Zusammenbau vereinfacht, da nur ein freies Ende durch das Spannschloss bzw. das Haltestück geschoben werden muss.

Möglich ist es aber auch, dass beide Endstücke durch das Gehäuse und das Haltestück geführt sind, wobei diese Ausführungsform leicht ein Austauschen beispielsweise eines beschädigten Spannschlosses ermöglicht.

Falls vorgesehen ist, dass der Seitenstrang als Spannmittel eine um mehr als 360° umlaufende, steife und selbsttragende Stahldrahtfeder aufweist, deren Endbereiche die Endabschnitte bilden, kann sich ein gesondertes Spannmittel, wie eine Schraubenfeder entsprechend dem eingangs erwähnten Stand der Technik, erübrigen.

Besonders bei Verwendung einer Schraubenfeder als Zugmittel kann es jedoch sinnvolle sein, wenn das Zugelement als flexibles Seil ausgebildet ist.

Eine erhöhte Sicherheit, vor allem bei Auftreten höherer Kräfte an dem Zugelement ist gewährleistet, falls das Zugelement eine Profilierung aufweist, welche mit dem Haltestück formschlüssig im Sinne eines Blockierens in der Haltestellung zusammenwirkt.

In Hinblick auf eine lange Lebensdauer und eine bequeme Handhabung kann es sinnvoll sein, wenn das Zugelement des Seitenstranges von einem Schutzschlauch umhüllt ist bzw. wenn das Gehäuse an den Stellen des Durchtritts der Endabschnitte des Zugelementes nach außen abstehende, rohrförmige Führungsstutzen aufweist. Um z. B. ein Überdehnen einer Schraubenfeder zu vermeiden, kann es sinnvoll sein, wenn der Schutzschlauch eine Längenbegrenzung beinhaltet.

Gemäß einer Variante der Erfindung kann das zumindest eine Haltestück verschiebbar an dem Massestück angeordnet sein, wobei durch ein Zusammenwirken des zumindest einen Haltestücks mit zumindest einem ortsfest in dem Gehäuse angeordneten Verschiebelement der zumindest eine Endabschnitt des Zugelementes blockierbar ist. Auf diese Weise lässt sich ein sehr zuverlässiges Fixieren des Zugelementes während einer Fahrt realisieren.

Um ein selbsttätiges Zurückkehren in eine definierte Ruhelage zu gewährleisten, ist es auch besonders vorteilhaft, wenn das Massestück T-förmig ausgebildet ist, und die Achse normal zu seinem Querbalken und durch diesen verläuft, wobei das zumindest eine Haltestück verschiebbar an dem Querbalken angeordnet ist.

Eine sehr gute Blockierwirkung lässt sich dadurch erzielen, dass der zumindest eine Endabschnitt in einer Blockierposition zwischen dem zumindest einen Haltestück und der Achse eingeklemmt ist.

Die Klemmwirkung kann dadurch weiter erhöht werden, dass das zumindest eine Verschiebeelement eine keilförmige Auflauffläche für das zumindest eine Haltestück aufweist.

Um eine definierte Bewegung der Haltestücke und somit eine zuverlässige Klemmwirkung zu erzielen, kann das zumindest eine Haltestück eine in eine schlitzförmige Öffnung des Querbalkens eingreifende Achse zu seiner Führung entlang der Öffnung aufweisen.

Um auf einfache Weise zwei Endstücke des Seitenstranges fixieren zu können, können an dem Querbalken zwei gegeneinander verschiebbare Haltestücke und zwei Verschiebelemente mit keilförmigen Auflaufflächen vorgesehen sein, wobei die beiden keilförmigen Auflaufflächen punktsymmetrisch zueinander angeordnet sein können.

Ein optimale Klemmwirkung lässt sich dadurch erzielen, dass das zumindest eine Haltestück als Zahnrad ausgebildet ist, wobei die Auflauffläche des korrespondierenden Verschiebelements eine entsprechend gezahnte Oberfläche aufweist.

Die Erfindung samt weiteren Vorteilen ist im Folgenden an Hand beispielsweiser Ausführungsformen näher erläutert, die in der Zeichnung veranschaulicht sind. In dieser zeigen schematisch:
Fig. 1 eine Gleitschutzkette mit einem Spannschloss für deren einen Seitenstrang, montiert auf einem Fahrzeugreifen, in Seitenansicht,
Fig. 2 eine erste Ausführungsform eines Spannschlosses nach der Erfindung, in einer Seitenansicht entsprechend Fig. 1, mit abgenommenem Gehäusedeckel und dem Massestück in Ruhestellung,
Fig. 3 eine Ansicht entsprechend Fig. 2, jedoch mit auf Grund der Fliehkraft nach außen verschwenktem Haltestück des Massestückes,
Fig. 4 in schaubildlicher vergrößerter Ansicht das Massestück des Spannschlosses nach Fig. 2 und 3,
Fig. 5 eine zweite Ausführungsform eines Spannschlosses nach der Erfindung, in einer Seitenansicht entsprechend Fig.1, mit abgenommenem Gehäusedeckel und dem Massestück und dem mit diesem kinematisch verbundenen Haltestück in Ruhestellung,
Fig. 6 eine Ansicht entsprechend Fig. 4 , jedoch mit auf Grund der Fliehkraft verdrehtem Massestück und nach außen verschwenktem Haltestück,
Fig. 7 und 8 eine dritte Ausführungsform der Erfindung in Ruhe- bzw. Haltestellung in einer Ansicht entsprechend den vorgehenden Figuren,
Fig. 9 einen Abschnitt eines als Stahlseil ausgebildeten Zugelements mit aufgepressten Nippeln,
Fig. 10 Abschnitte eines Zugelementes mit ringförmigen Nuten bzw. konischen Eintiefungen,
Fig. 11 Abschnitte eines Seitenstranges mit einer Schraubenfeder sowie Anbindungsbolzen für Seitenhaken,
Fig. 12 eine vierte Ausführungsform der Erfindung mit einem verschiebbaren Klemmteil,
Fig. 13 eine Detail aus Fig.12 in vergrößertem Maßstab,
Fig. 14 bis 18 verschiedene Varianten von Klemmteilen der Ausführung nach Fig. 12,
Fig. 19 und 20 verschiedene Möglichkeiten der Federbelastung des verschwenkbaren Massestücks der Ausführung nach Fig. 12,
Fig. 21 eine fünfte Ausführungsform der Erfindung in schematischer Darstellung,
Fig. 22 in vergrößerter schaubildlicher Darstellung einen Klemmteil der Ausführung nach Fig. 21,
Fig. 23 eine sechste Ausführungsform eines Spannschlosses nach der Erfindung mit abgenommenem Gehäusedeckel und mit auf Grund der Fliehkraft verschwenktem Haltestück;
Fig. 24 eine stirnseitige Ansicht des Spannschlosses aus Fig. 23;
Fig. 25 einen Schnitt entlang der Linie B-B in Fig. 24;
Fig. 26 eine Ansicht entsprechend Fig. 23, bei welcher sich das dem Haltestück in Ruhestellung befindet,
Fig. 27 eine stirnseitige Ansicht des Spannschlosses aus Fig. 26;
Fig. 28 einen Schnitt entlang der Linie A-A in Fig. 27 und
Fig. 29 eine perspektivische Ansicht des Spannschlosses aus Fig. 23.

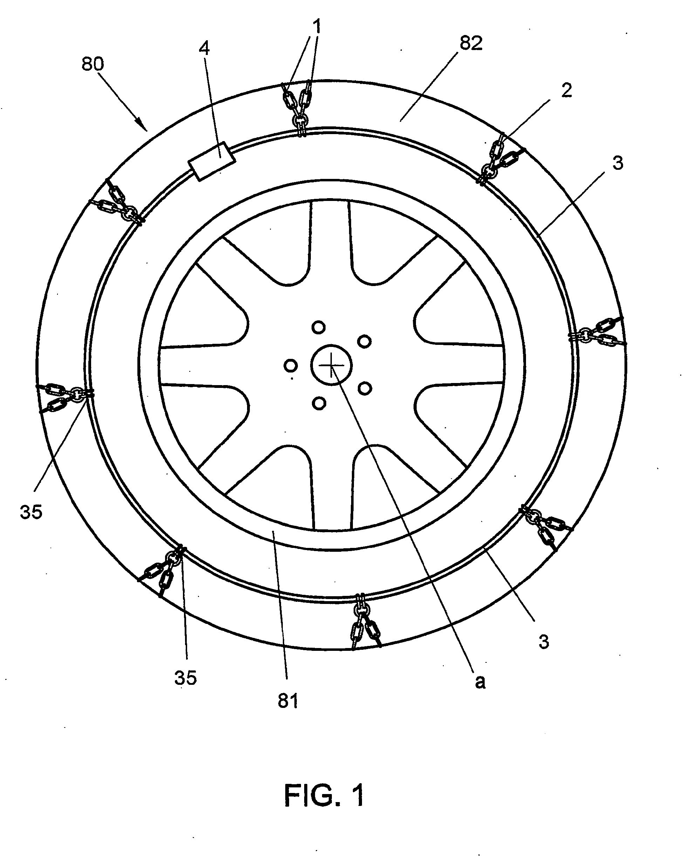

Nunmehr auf Fig. 1 Bezug nehmend erkennt man eine Gleitschutzkette 1, die auf einen Reifen 80 eines Fahrzeugrades 81 mit der Radachse a aufgezogen ist. Das Kettennetz 2 der Gleitschutzkette ist an der Innen- und der Außenseite des Reifens bzw. Rades in bekannter Weise durch Seitenstränge 3 zusammen gehalten bzw. gespannt. Hier sei angemerkt, dass die Seitenstränge an der Innenseite des Reifens elastisch ausgebildet und durch ein Spannschloss 4 nach der Erfindung zusammengehalten werden können, wobei an der Außenseite eine andere Konstruktion verwendet wird. Andererseits kann die gesamte Spanneinrichtung einschließlich des Spannschlosses innen und außen auch gleich ausgebildet sein. Jedenfalls ist die Erfindung in ihrer Anwendung nicht auf eine der beiden Reifenseiten beschränkt.

Der Seitenstrang 3 weist eine Zugfeder - beispielsweise eine Spiralfeder - und in ihrem Inneren einen Draht auf. Im Rahmen der Erfindung ist der im Inneren der Zugfeder angeordnete Draht bevorzugt als zugstabiler Stahlfederdraht ausgeführt, der sich um mehr als 360°, typischerweise eineinhalb Windungen, mit einem Durchmesser von typischerweise 1,5 mm an einer Seitenfläche 82 des Reifens erstreckt. Die Zugspannung der Zugfeder, die den Mantel darstellt, ist so groß, dass die Gleitschutzkette, beispielsweise eine Schneekette, nach dem Anlegen der Kette gespannt ist. Der Seitenstrang 3 weist - jedenfalls im Bereich des Spannschlosses 4 - drahtförmige Endabschnitte des im Inneren der Zugfeder angeordneten Drahtes auf. Das Spannschloss 4 dient dazu, die Enden des Drahtes auch beim Einwirken erheblicher Kräfte im Betrieb zu Fixieren.

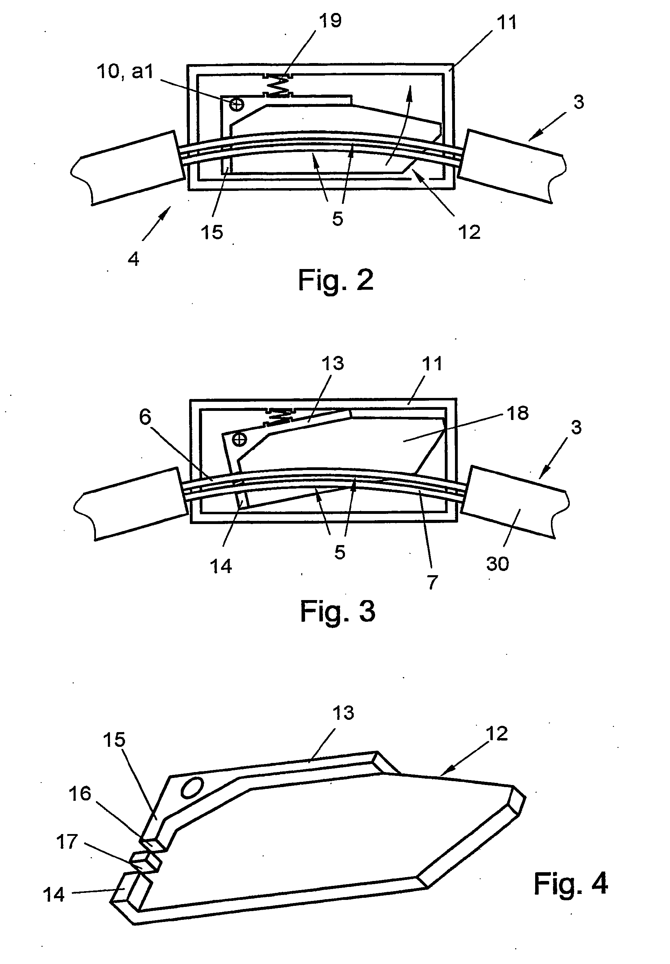

Details einer ersten Ausführungsform eines gemäß der Erfindung ausgebildeten Spannschlosses 4 sind den Fig. 2 bis 4 zu entnehmen. Das Spannschloss besitzt ein Gehäuse 11, in welchem mit Hilfe eines Lagerstiftes 10 ein bewegbares, exzentrisch bezüglich seiner durch den Stift definierten Schwenkachse a1 ausgebildetes und über den Lagerstift gegen das Gehäuse abgestütztes Massestück 12 angeordnet ist.

Das Massestück 12 kann als Winkelhebel mit ungleich langen Schenkeln 13, 14 angesehen werden, wobei der längere Schenkel 13 annähernd tangential innerhalb des Gehäuses 11 verläuft und der kürzere, als Haltestück 15 ausgebildete Schenkel 14, der als Haltestück 15 dient, zwei Durchlässe 16, 17 für Endabschnitte 6, 7 der Stahldrahtfeder aufweist. Wie aus Fig. 4 besser ersichtlich, ist jeder Durchlass 16, 17 als zu einem Rand des Haltestücks 15 hin offene Nut ausgebildet, in welcher - siehe Fig. 2 und 3 - ein Endabschnitt des Drahtes geführt werden kann.

Die Schenkel 13, 14 des Massestücks 12 sind hier über eine im wesentlichen normal zur Radachse a liegende Platte 18 miteinander verbunden, sodass sich einerseits eine genügend große, bezüglich der Schwenkachse exzentrische Masse ergibt und andererseits ein Raum für die durchlaufenden Endabschnitte geschaffen ist, welche bei geschlossenem Gehäuse zwischen dieser Platte und dem (nicht dargestellten) Gehäusedeckel verlaufen.

Um einen definierten Ruhezustand, in welchem das Spannschloss "offen" ist, unabhängig von der Radstellung zu erhalten, kann das Massestück in seiner Ruhelage federbelastet sein. Bei der Ausführung nach den Fig. 2 bis 4 ist hierzu eine Feder 19 zwischen dem längeren Schenkel 13 und der Gehäusewand platziert, welche das Massestück 12 in der Zeichnung nach unten gegen den unteren Innenrand des Gehäuses 11 drückt und so in der Ruhelage hält.

Bei Drehung des Rades beginnt die Fliehkraft auf das Massestück 12 zu wirken, wodurch der bezüglich der Schwenkachse massenreichere Abschnitt - hier der Schenkel 13 und der Großteil der Platte 18 - in der Folge radial nach außen verschwenkt wird, um gegen die Kraft der Feder 19 in die in Fig. 3 gezeigte Lage zu gelangen. Dabei wird auch der kürzere Schenkel 14 verschwenkt und die beiden durch die Durchlässe 16, 17 geführten Endabschnitte 6, 7 der Stahldrahtfeder werden durch das Verkanten ihrer Führung festgeklemmt Der Federstahlring, welcher der Kern des Seitenstranges ist, bleibt während der Rotation des Reifens somit sicher zusammengehalten und damit bleibt auch der sichere Sitz der Reifenschutz- oder Schneekette erhalten. Wenn das Rad bzw. das Fahrzeug wieder zum Stillstand kommt, löst sich das Spannschloss 4 automatisch und die Kette kann, falls gewünscht abgenommen werden, ohne dass weitere Handgriffe an dem Spannschloss erforderlich wären.

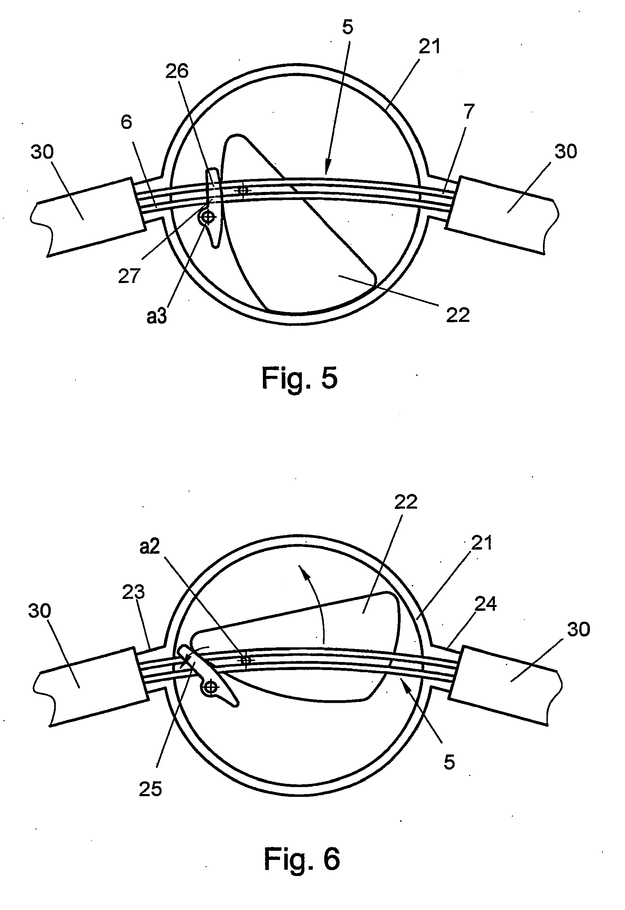

Bei der in den Fig. 5 und 6 dargestellten Ausführungsform mit einem in Vorderansicht runden Gehäuse 21 ist in diesem ein von einem um eine Achse a2 schwenkbaren Massestück 22 gesondertes Haltestück 25 schwenkbar gelagert und kinematisch mit dem Massestück 22 so verbunden ist, dass ein Verschwenken des Massestücks aus seiner Ruhelage zu einem Verschwenken des gesonderten Haltestücks 25 aus dessen Ruhelage und damit zu der verkantenden Bewegung bezüglich der drahtförmigen Endabschnitte 6, 7 führt. Bei dieser Ausführungsform sind die drahtförmigen Endabschnitte 6, 7 durch Durchgangsbohrungen 26 bzw. 27 des schwenkbaren Haltestücks 25 geführt.

Die kinematische Verbindung ist hier dadurch gegeben, dass bei einem Verschwenken des Massestücks 22 dessen kürzerer Schenkel an dem Haltestück 25 angreift und um dessen Achse a3 verschwenkt, wodurch es zu dem Festklemmen der beiden Abschnitte 6, 7 in dem Haltestück 25 kommt. Für die kinematische Verbindung könnte auch eine andere Lösung verwendet werden, beispielsweise kann eine formschlüssige Zahnrad-Getriebeverbindung zur Anwendung gelangen. Die Ausführung nach Fig. 5 und 6 ist zwar etwas aufwendiger, als die zuvor beschriebene, doch ist hier durch die Bemessung der unterschiedlichen Hebelarme von Massestück einerseits und gesondertem Haltestück andererseits ein großer Spielraum für die Bemessung der Klemmkräfte gegeben.

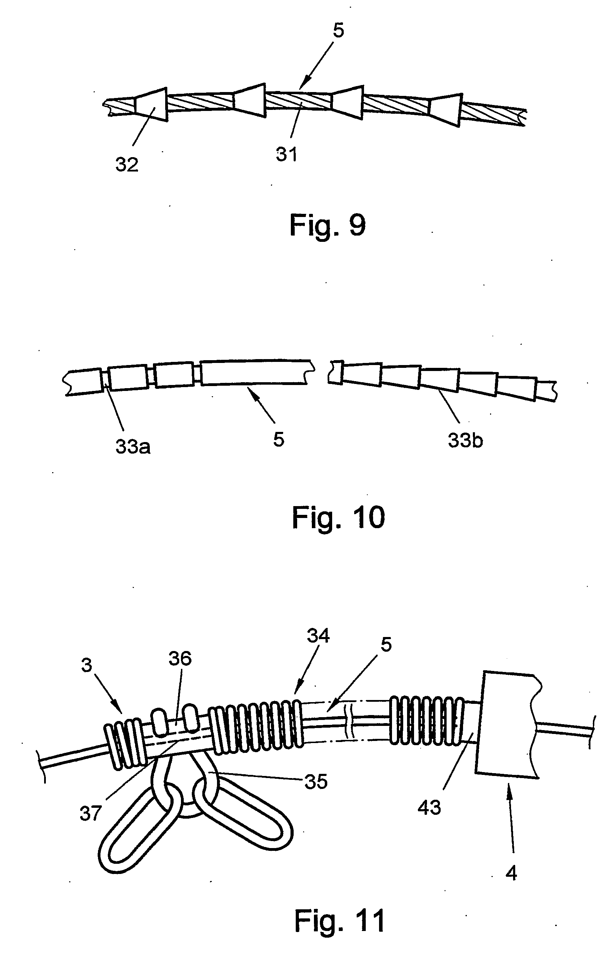

Um die Endabschnitte an ihrem Ein/Austrittsstellen des Gehäuses 21 zu führen, weist dieses an den Stellen des Durchtritts der drahtförmigen Endabschnitte 6, 7 nach außen abstehende, rohrförmige Führungsstutzen 23, 24 auf, die auch entsprechend der Krümmung des Federstahlringes gekrümmt sind. Dadurch kann eine Beschädigung des Gehäuses 21 durch die Endabschnitte 6, 7 verhindert werden. Außerdem ist die Stahldrahtfeder des Seitenstranges 3 von einem Schutzschlauch 30 aus Gummi oder Kunststoff umhüllt, was die Handhabung für den Benutzer angenehmer macht und den Federstahlring vor Beschädigungen schützt. Zusätzlich kann der Schutzschlauch 30 in seiner Länge bzw. in seiner Längenausdehnung so abgestimmt sein, dass eine Überdehnung der Schraubenfeder 34 (Fig.11) nicht möglich ist, sodass die Schraubenfeder immer wieder ihre Ausgangsstellung einnehmen kann. Eine solche Längenbegrenzung ist z. B. vielen Gewebeschläuchen inhärent, sie kann aber auch durch ein mitgeführtes eigenes Seilstück erreicht werden. Der Schutzschlauch 30 kann durchgehend ausgebildet sein oder aber auch an einem Anbindungsbolzen 36 (Fig.11) oder am Gehäuse 21 im Bereich der Führungsstutzen 23 und 24 fixiert sein.

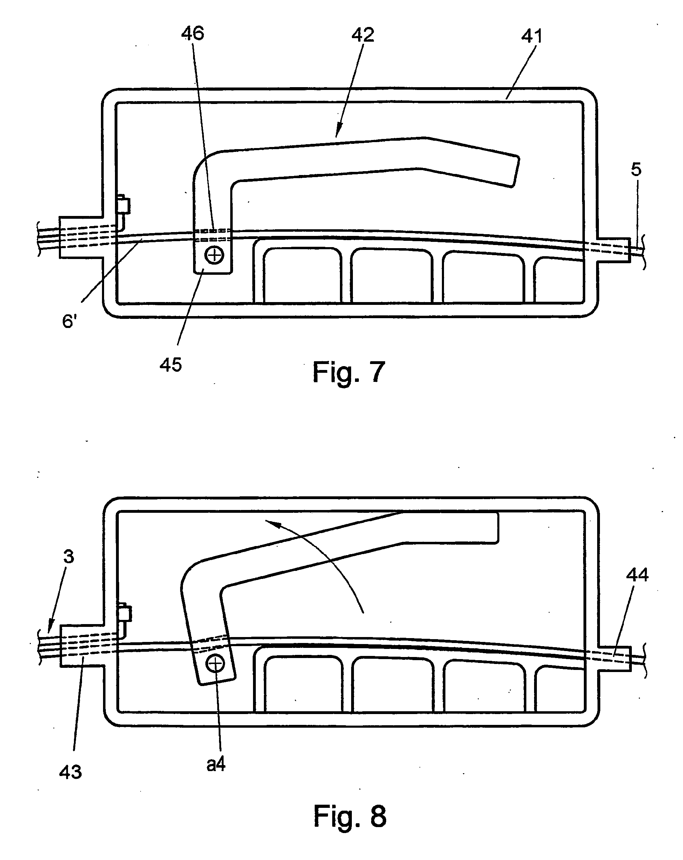

Die in Fig. 7 und 8 gezeigte Ausführung ist besonders einfach aufgebaut. In einem rechteckigen Gehäuse 41 ist ein Massestück 42 als winkelförmiger Hebel ausgebildet, der um eine Achse a4 verschwenkbar ist Der längere Schenkel verläuft etwa tangential und besitzt den größten Teil der Masse des Massestückes 42, wogegen der kürzere Schenkel, welcher das Haltestück 45 bildet, in Nähe der Schwenkachse a4 eine Durchgangsbohrung 46 aufweist, durch die ein drahtförmiger Endabschnitt 6 des Seitenstranges 3 geführt ist: Auch bei dieser Ausführung ist der Seitenstrang durch einen zugstabilen Stahlfederdraht gebildet, der sich um mehr als 360° erstreckt. Im Gegensatz zu den beiden zuvor erläuterten Ausführungen ist jedoch ein Ende des Federdrahtringes an dem Gehäuse befestigt - in Fig. 7 und 8 an der linken Gehäuseseite - und der andere Endabschnitt 6 ist durch das Gehäuse 41 und die Durchgangsbohrung 46 des Haltestücks 45 gerührt.

Ebenso wie die zuvor beschriebenen Ausführungen besitzt das Gehäuse im Aus/Eintrittsbereich des drahtförmigen Endabschnittes nach außen abstehende, rohrförmige Führungsstutzen 43, 44, die entsprechend der Krümmung des Federstahlringes gekrümmt sind.

Es sei weiters darauf hingewiesen, dass an Stelle eines runden Stahlfederdrahtes auch ein Stahlfederflachband verwendet werden könnte. Weiters kann der Stahlfederdraht durch ein flexibles Zugelement, wie ein Stahlseil oder ein hochfestes Kunststoffseil ersetzt werden.

Fig. 9 zeigt einen Abschnitt eines solchen Stahlseils 31, das hier als Zugelement 5 dient und das ähnlich eines Baudenzugstahlseils für eine Fahrradbremse ausgebildet ist und mit eine Profilierung bildenden, aufgepressten Nippeln 32 versehen ist, welche einen solchen Durchmesser aufweisen, dass sie in Ruhestellung des Haltestückes durch dessen durchlässig gleiten können, bei radial nach außen verschwenktem Massestück jedoch formschlüssig blockiert werden.

Generell kann eine solches formschlüssiges Blockieren der Endabschnitte des Zugelementes 5 vorteilhaft sein, besonders wenn so hohe Kräfte auf den Seitenstrang wirken, dass ein Reibungsschluss z. B. an einem glatten Stahldraht für ein Blockieren nicht sicher ausreicht.

In diesem Sinn ist eine Ausführungsform nach Fig. 10 zu verstehen, die in zwei Varianten eine Profilierung eines als Stahldrahtes ausgebildeten Zugelementes 5 zeigt, nämlich in Fig. 10 links ringförmige Nuten 33a und in Fig. 10 rechts konische Eintiefungen 33b. Eine solche Profilierung ergibt zusammen mit den Durchgangsbohrungen oder Durchlässen des Haltestückes ein sicheres formschlüssiges Blockieren.

In Fig.11 ist abschnittsweise eine Ausführung dargestellt, bei welcher der Seitenstrang 3 eine Schraubenfeder 34 bzw. mehrere Abschnitte einer solchen Schraubenfeder besitzt, in deren Inneren das Zugelement 5, z. B. ein Stahldraht, geführt ist. Zur Anbindung des Kettennetzes der Gleitschutzkette sind Seitenhaken 35 vorgesehen, die auch in Fig. 1 eingezeichnet sind. Um diese Seitenhaken nicht direkt auf den Seitenstrang 3 zu hängen, der dadurch beschädigt werden könnte, hier nämlich die Schraubenfeder 34, sind Anbindungsbolzen 36 vorgesehen, die an beiden Seiten mit der Schraubenfeder 34 verbunden sind. Die Bolzen 36 besitzen bei dieser Ausführungsform eine Längsbohrung 37, durch welche das Zugelement 5 geführt ist. Die Schraubenfeder kann beispielsweise auf den Anbindungsbolzen aufgepresst sein, der an den entsprechenden Stellen zweckmäßigerweise eine Rillung oder ein Gewinde besitzt. Auch an den Stellen, an welchen der Seitenhaken an dem Anbindungsbolzen 36 angreift, kann eine entsprechende Profilierung, wie z. B. Rillen, vorgesehen sein, um ein verschieben des Seitenhakens 35 zu vermeiden.

Rechts in Fig. 11 ist ersichtlich, dass die Schraubenfeder 34 in ähnlicher Weise wie an den Anbindungsbolzen an den Führungsstutzen 43 des Spannschlosses 4 befestigt ist.

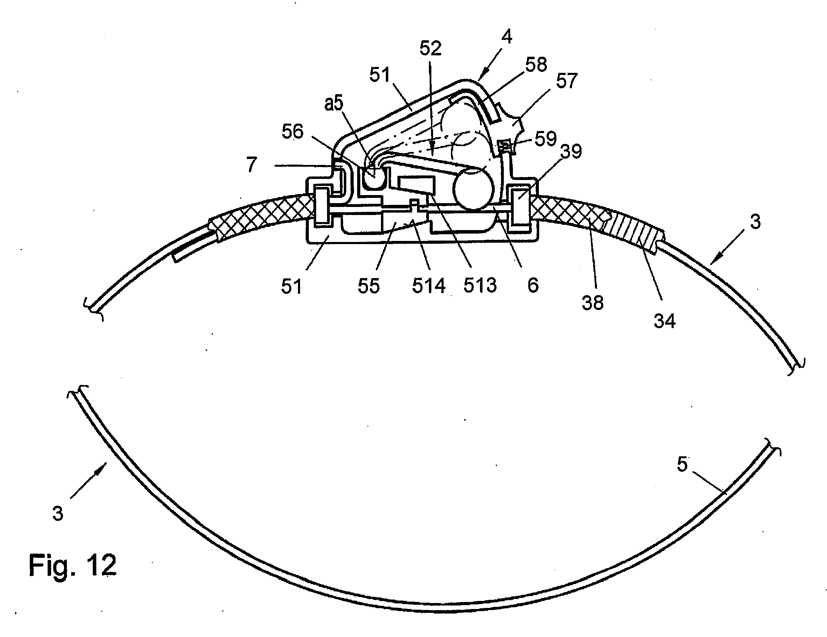

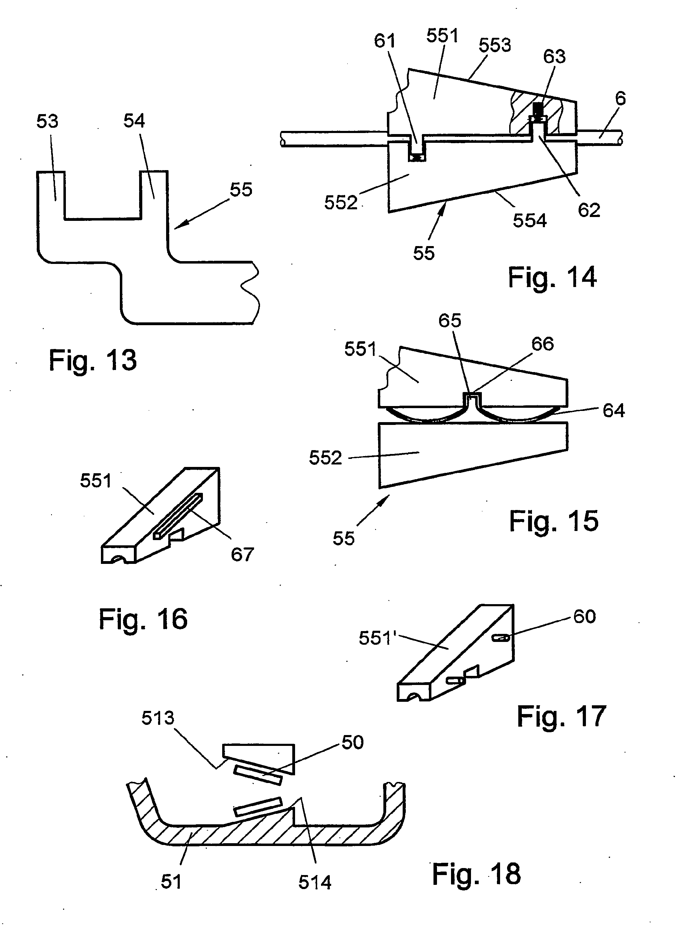

Aus Fig. 12 geht eine weitere Ausführungsform der Erfindung hervor, bei welcher im Gehäuse 51 das bewegbare Massestück 52 im Bereich seiner Schwenkachse a5 eine Schiebeabschnitt 56 besitzt. Dieser Schiebeabschnitt ist - siehe auch Fig.13 - zwischen zwei Angriffsflanken 53, 54 des hier keilförmig ausgebildeten Haltstücks 55 gelegen, sodass er, an jeder Flanke angreifend, das Haltestück sowohl im Sinne eines Festklemmens als auch eines Lösens des einen, in der Zeichnung rechten Endabschnitts 6 verschieben kann. Der Schiebeabschnitt 56 ist nockenförmig ausgebildet und exzentrisch bezüglich der Schwenkachse a5 gelegen.

Bei dieser Ausführungsform ist das keilförmige Haltestück 55 zweiteilig ausgeführt, wobei der eine Endabschnitt 6 - siehe Fig. 14 und 15 - zwischen den beiden Teilen 551, 552 geführt und dort festklemmbar ist, und der Schiebeabsclmitt 56 an dem in der Zeichnung oberen Teil 551 angreift. Jeder Teil 551, 552 des keilförmigen Haltestücks 55 besitzt eine geneigte Außenfläche 553 bzw. 554, die mit einer zugeordneten, gehäusefesten Auflauffläche 513, 514 zusammenwirkt.

Es ist ersichtlich, dass bei einem Verschwenken des Massestücks 52 unter Einwirkung der Fliehkraft nach außen sein Schiebeabschnitt 56 das Haltestück 55 verschieben wird (in der Zeichnung nach rechts), wobei die beiden Teile 551, 552 des Massestücks zusammen und gegen den Endabschnitt 6 gedrückt werden und diesen festklemmen.

Fig. 12 entnimmt man weiters, dass bei dieser Ausführungsform der zweite Endabschnitt 7 umgebogen und in dem Gehäuse, z. B. in einer Bohrung desselben verankert ist Der Seitenstrang 3 besitzt auch hier das Zugelement 5 mit den bereits beschriebenen Endabschnitten 6 und 7, wobei um das Zugelement 5 die Schraubenfeder 34 gewickelt und von einer Ummantelung 38 abgedeckt ist, welche als Schutz und gleichzeitig als Überdehnsicherung dient. Diese Ummantelung 38 wird auf die Zugfeder zweckmäßigerweise aufgewoben. Verankert ist diese Umhüllung des Seitenstrangs mit Hilfe einer Aufpresshülle 39 an beiden Seiten des Gehäuses 51 in entsprechenden Ausnehmungen, wie der Zeichnung unschwer entnehmbar.

Im Folgenden werden einige Möglichkeiten beschrieben, die es auch ermöglichen, das Verklemmen sicher zu lösen, wenn beispielsweise durch die Radstellung oder durch Einwirkung von Schmutz etc. das Massestück nicht von selbst in seine Ruhestellung gelangt. In Fig. 12 ist dazu ein Lösearm 58 vorgesehen, der im Inneren des Gehäuses 51 angeordnet ist und mit Hilfe eines an der Außenfläche des Gehäuse befindlichen Schiebers 57 so verschoben werden kann, dass er an dem Endstück des Massestücks angreift und dieses hinunterdrücken kann. Damit der Schieber bzw. der Lösearm im Normalbetrieb die Bewegung des Massestücks 52 nicht beeinträchtigt, ist er durch eine Druckfeder 59 im Sinne einer Bewegung nach oben (in Fig. 12) federbelastet.

Man kann weiters vorsehen, dass die beiden Teile 551, 552 des keilförmigen Haltstücks 55 im Sinne eines Auseinanderdrückens durch Federn belastet sind. In Fig. 14 ist gezeigt, dass die beiden Teile 551 und 551 im wesentlichen formschlüssig über je eine Nut 61 und einen Steg 62 miteinander in Verbindung gehalten sind, wobei an dem Endteil des Steges 62 je eine Druckfeder 63 angreift, die beispielsweise in einer Vertiefung der Teile 551, 552 gehalten sind.

In Fig. 15 ist eine andere Möglichkeit der Federbelastung der beiden Teile 551 und 552 gezeigt. Hier ist zwischen diesen Teilen eine relativ flache Blattfeder, 64 angeordnet, wobei diese Blattfeder 64 einen Mittelsteg 65 besitzt, der in einer Vertiefung 66 des Teils 551 aufgenommen ist, um ein Verschieben der Feder zu verhindern. Eine solche Federbelastung im Sinne des Auseinanderdrückens der beiden Teile 551, 552 verhindert ein Festklemmen eines Endstückes 6 in Ruhestellung des Rads.

In den Fig. 16 bis 18 sind Möglichkeiten der Führung der beiden Teile 551, 552 des Schiebeabschnitts 56 gezeigt. So besitzt gemäß Fig. 16 der äußere Teil 551 zwei seitliche Längsrippen 67, von welchen in der Darstellung allerdings nur eine ersichtlich ist. Solche Rippen können mit Vertiefungen in dem Gehäuse zusammenwirken. Alternativ können statt Längsrippen (67 nach Fig. 16) auch Stifte 60 vorgesehen sein, was in Fig. 17 bezeigt ist. Vertiefungen 50 in dem Gehäuse, die mit den Längsrippen 67 oder Stiften 60 zusammenwirken können, sind in Fig. 18 dargestellt.

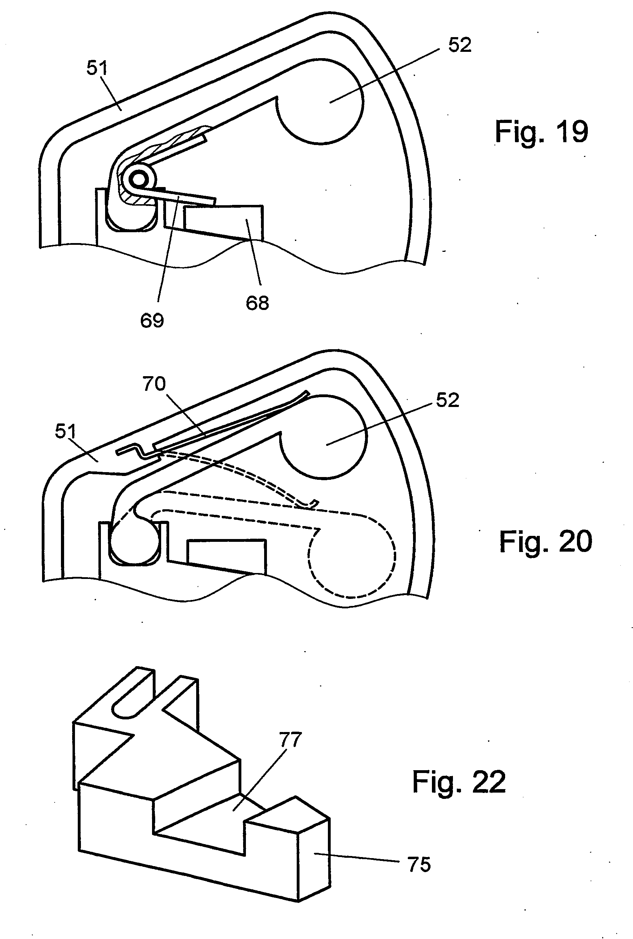

Um die Verwendung eines Löse-Schiebers 57 gemäß Fig. 12 vermeiden zu können, sind auch andere Federbelastungen des Massestücks, als die in Fig. 2 und 3 gezeigte, möglich. Dies ist in den Fig. 19 und 20 kurz gezeigt: Gemäß Fig. 19 sind zwei Arme einer Schenkelfeder 69 zwischen dem Hebel des Massestücks 52 und einem gehäusefesten Klemmbock 68 vorgesehen. Die Feder ist so vorgespannt, dass sie in Ruhestellung des Rades versucht, das Massestück 52 im Sinne des eingezeichneten Pfeils nach unten zu drücken. Erst bei Einwirkung der Fliehkraft wird diese Federkraft überwunden und in der Folge erfolgt das Festklemmen des Endabschnitts des Zugelements.

Fig. 20 zeigt ein Ausführung, bei welcher in dem Gehäuse am äußeren inneren Ende eine Blattfeder 70 eingeklemmt ist, wobei das Massestück 52 (oder ein anderes Massestück der gezeigten Ausführungsformen) unter Fliehkrafteinfluss die Blattfeder 70 zusammendrückt, wogegen im Ruhezustand des Rads die Blattfeder 70 das Massestück 52 nach innen drückt (strichliert eingezeichnet).

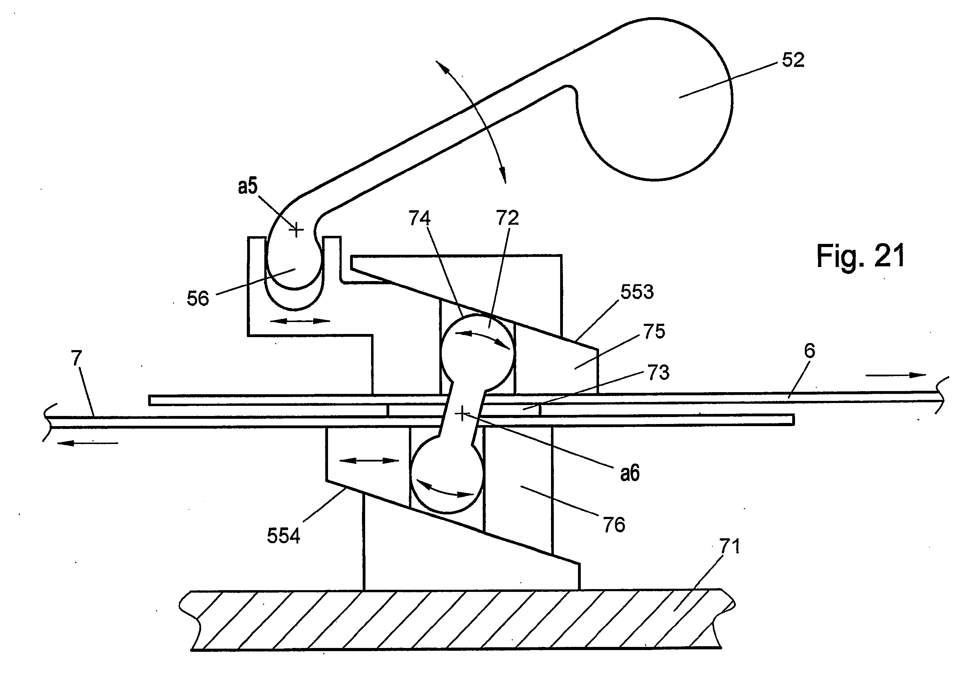

Nun wird anhand von Fig. 21 und 22 eine weitere Ausführungsform der Erfindung beschrieben, bei welcher zwei keilförmige Haltestücke 75, 76 gegenläufig vorgesehen sind. Diese Haltestücke sollen beide Endabschnitte 6, 7 des Zugelements festklemmen. Zu diesem Zweck sind die Haltestücke über ein Umlenkgelenk 72, das um eine Drehachse a6 verdrehbar ist, gegenläufig verschiebbar gekoppelt. Diese Zwangskopplung bewirkt, dass ein Verschieben eines Haltestücks in die eine Richtung ein Verschieben des anderen Haltestücks in die andere Richtung bewirkt. An dem in der Zeichnung oberen Haltestück 75 greift entsprechend der Ausführung nach Fig. 12 wiederum der Schiebeabschnitt 56 des bewegbaren Massestücks 52 an und es ergibt sich, dass ein nach außen (in der Zeichnung nach oben) Verschwenken des Massestücks 52 ein Verschieben des (oberen) Haltestücks 75 (in der Zeichnung nach rechts) und damit ein Verschieben des (unteren) Haltestücks 76 (in der Zeichnung nach links) zur Folge hat. Da auch hier die Haltestücke eine geneigte Außenfläche besitzen, die mit einer zugeordneten gehäusefesten Auflauffläche zusammenwirkt, verursacht die genannte Verschiebung der beiden Haltestücke ein Gegeneinander-Pressen, bzw. ein Pressen gegen die zwischen den Haltestücken und einem mittleren, vorzugsweise gehäusefesten Klemmbacken 73. Man sieht, dass die Bewegung der keilförmigen Haltestücke 75 bzw. 76 in der mit Pfeilen eingezeichneten Zugrichtung der beiden Endabschnitte 6 bzw. 7 erfolgt. Der Zug der Endabschnitte wirkt somit hier verstärkend auf das Klemmen. In Fig. 22 ist eines der beiden Haltestücke 75 schaubildlich dargestellt, um eine Aussparung 77 zeigen zu können, in welche das Endstück 74 des Umlenkgelenks 72 eingreift.

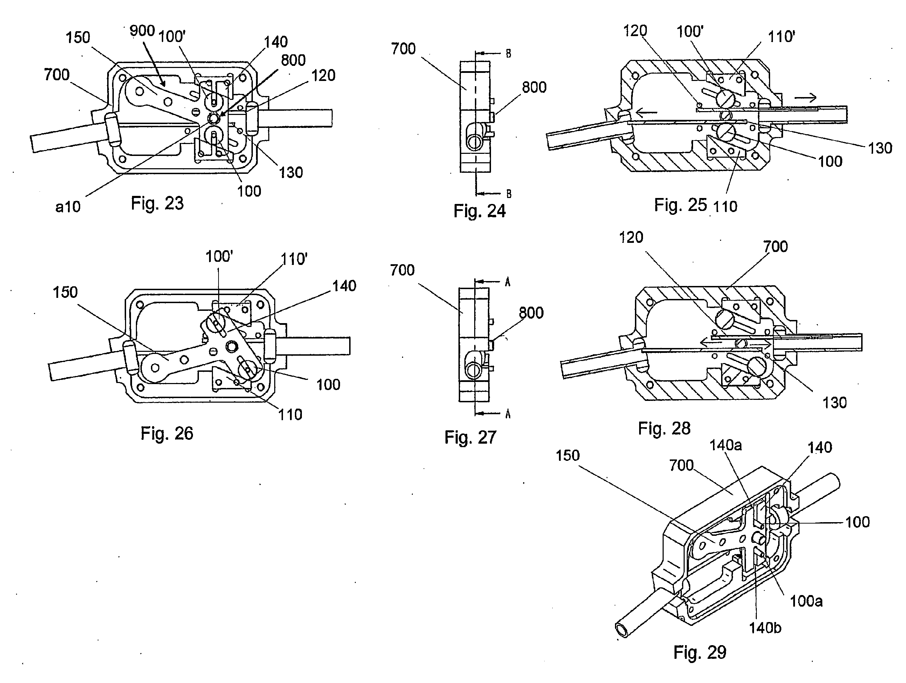

Details einer weiteren Ausführungsform eines gemäß der Erfindung ausgebildeten Spannschlosses sind den Fig. 23 bis 29 zu entnehmen. Das Spannschloss besitzt ein Gehäuse 700, in welchem mit Hilfe eines Lagerstiftes 800 ein bewegbares, exzentrisch bezüglich seiner durch den Stift 800 definierten Schwenkachse a10 ausgebildetes und über den Lagerstift gegen das Gehäuse abgestütztes Massestück 900 angeordnet ist.

An dem Massestück 900 sind zwei Haltestücke 100, 100' verschiebbar angeordnet. Durch ein Zusammenwirken der Haltestücke 100,100' mit je einem ortsfest in dem Gehäuse 700 angeordneten Verschiebelement 110, 110' sind die Endabschnitte 120, 130 des Zugelementes blockierbar ist.

Das Massestück 900 ist gemäß der dargestellten Ausführungsform T-förmig ausgebildet, wobei die Achse a10 bzw. der Stift 800 normal dem Querbalken 140 und durch diesen verläuft. Die Haltestücke 100, 100' sind hierbei verschiebbar an dem Querbalken 140 angeordnet, wobei die Haltestück 100, 100' je eine in eine schlitzförmige Öffnung 140a, 140b des Querbalkens 140 eingreifende Achse 100a, 100b aufweisen (Fig. 29). Dadurch wird eine Führung der Haltestücke 100,100' entlang der Öffnungen 140a, 140b gewährleistet.

Bei Drehung des Rades beginnt die Fliehkraft auf das Massestück 900 zu wirken, wodurch der bezüglich der Schwenkachse massenreichere Abschnitt - hier der. Schenkel 150 - in der Folge radial nach außen verschwenkt wird, um aus der in Fig. 23 bis 25 in die in Fig. 26 - 28 gezeigte Lage zu gelangen. Dabei wird auch der kürzere Schenkel 140 verschwenkt und die beiden durch die beiden Haltelemente 100, 100' in ihrer Führung in Richtung der Achse a10 bewegt, wobei die Endabschnitte 120 und 130 des Spannstranges zischen je einem Haltelement 100, 100' und dem Stift 800 festgeklemmt werden. Durch die Drehbewegung des Schenkels 140 laufen die bevorzugt als Zahnräder ausgebildeten Haltelemente 100, 100' auf Auflaufflächen der keilförmigen Verschiebeelemente 110, 110' auf, wodurch sich die Haltelemente 100, 100' aufeinander zu bewegen. Die Auflaufflächen weisen hierbei eine mit den Zahnrädern korrespondierende Zahnung auf. Der Federstahlring, welcher der Kern des Seitenstranges ist, bleibt während der Rotation des Reifens somit sicher zusammengehalten und damit bleibt auch der sichere Sitz der Reifenschutz- oder Schneekette erhalten. Wenn das Rad bzw. das Fahrzeug wieder zum Stillstand kommt, löst sich das Spannschloss infolge des Herabsinkens des Schenkels 140 und der damit verbundenen Bewegung der Haltelemente 100, 100' automatisch und die Kette kann, falls gewünscht abgenommen werden, ohne dass weitere Handgriffe an dem Spannschloss erforderlich wären (Fig. 26 - 28).

An dieser Stelle sei erwähnt, dass natürlich auch nur ein Haltestück 100, 100' vorgesehen sein könnte, wobei nur ein Endabschnitt 120 oder 130 geklemmt werden würde. Der zweite Endabschnitt könnte beispielsweise fix in dem Gehäuse 700 verankert sein.

Alle zuvor beschriebenen Ausführungen weisen verschwenkbare Massestücke auf und werden als besonders praxisgerecht und zuverlässig angesehen, doch sollte es für den Fachmann klar sein, dass auch ein linear radial bewegbares Massestück zum Einsatz kommen kann, welches direkt oder über einen kinematisch gekoppelten Haltekörper das gewünschte Festklemmen der Endabschnitte bzw. eines Endabschnittes bei Drehung des Rades bewirkt. Auch in diesem Fall kann die Bewegung gegen die Kraft einer Feder erfolgen.

## Patentansprüche

1. Spannschloss (4) zum Fixieren zweier drahtförmiger Endabschnitte (6, 7) eines ein Zugelement (5) aufweisenden Seitenstranges (3) einer Gleitschutzkette (1) für ein Rad eines Fahrzeuges, mit einem Gehäuse (11, 21, 41), in welchem zumindest ein bewegbares Haltestück (15, 25, 45) untergebracht ist, wobei zumindest einer der drahtförmigen Endabschnitte mittels des zumindest einen Haltestücks vorübergehend fixierbar ist, **dadurch gekennzeichnet, dass** in dem Gehäuse (11, 21, 41) ein bewegbares Massestück (12, 22, 42) angeordnet ist, welches aus einer bei Stillstand des Rades vorliegenden Ruhestellung unter Einwirkung der Fliehkraft bei Rotation des Rades zumindest abschnittsweise radial nach außen bewegt wird, und diese Bewegung ein Blockieren des zumindest einen Endabschnittes (6, 7) des Zugelementes bewirkt.

2. Spannschloss nach Anspruch 1, **dadurch gekennzeichnet, dass** ein Endabschnitt des Zugelementes durch das Gehäuse und einen Durchlass (16, 17, 26, 27, 46) des zumindest einen Haltestücks geführt ist, wobei eine verkantende Bewegung des Haltestücks bezüglich des zumindest einen drahtförmigen Endabschnittes dessen vorübergehendes Fixieren zur Folge hat.

3. Spannschloss nach Anspruch 1 oder 2, **dadurch gekennzeichnet, dass** das Massestück (12, 22, 42) in seiner Ruhelage federbelastet (19) ist.

4. Spannschloss nach einem der Ansprüche 1 bis 3, **dadurch gekennzeichnet, dass** das Massestück (12, 42) exzentrisch um eine Achse (a1, a4) schwenkbar gelagert und als Winkelhebel mit ungleich langen Schenkeln (13, 14) ausgebildet ist, wobei der längere Schenkel (13) annähernd tangential innerhalb des Gehäuses (11, 41) verläuft und der kürzere, als Haltestück (15) ausgebildete Schenkel (14) zumindest einen Durchlass (16, 17, 46) für den zumindest einen Endabschnitt (6, 7) des Zugelementes aufweist.

5. Spannschloss nach einem der Ansprüche 1 bis 3, **dadurch gekennzeichnet, dass** in dem Gehäuse (21) ein von dem schwenkbaren Massestück (22) gesondertes Haltestück (25) schwenkbar gelagert und kinematisch mit dem Massestück (12) so verbunden ist, dass ein Verschwenken des Massestücks aus seiner Ruhelage zu einem Verschwenken des gesonderten Haltestücks aus dessen Ruhelage und damit zu der verkantenden Bewegung bezüglich des zumindest einen Endabschnittes des Zugelementes (5) führt.

6. Spannschloss nach einem der Ansprüche 1 bis 5, **dadurch gekennzeichnet, dass** der zumindest eine Endabschnitt (6, 7) des Zugelementes (5) in einer Durchgangsbohrung (26, 27, 46) des Haltestücks (25, 45) oder in einer zu einem Rand des Haltestücks hin offenen Nut (16,17) geführt ist.

7. Spannschloss nach einem der Ansprüche 1 bis 3, **dadurch gekennzeichnet, dass** das Haltestück (55) keilförmig, verschiebbar und gegen zumindest eine Auflauffläche (513, 514) des Gehäuses (51) abstützbar ausgebildet ist, und das bewegbare Massestück (52) verschwenkbar ist und im Bereich seiner Schwenkachse (a5) einen Schiebeabschnitt (56) besitzt , welcher bei einem Verschwenken des Massestücks unter Fliehkrafteinfluss das keilförmige Haltestück (55) im Sinne eines Festklemmens des zumindest einen, an einer Klemmfläche des Haltestücks geführten Endabschnittes (6) verschiebt.

8. Spannschloss nach Anspruch 7, **dadurch gekennzeichnet, dass** der Schiebeabschnitt (56) zwischen zwei Angriffsflanken (53, 54) des keilförmigen Haltestückes (55) gelegen ist, sodass er, an je einer Flanke angreifend, das Haltestück sowohl im Sinne eines Festklemmens als auch eines Lösens des zumindest einen Endabschnittes (6) verschieben kann, und der Schiebeabschnitt (56) nockenförmig, exzentrisch bezüglich der Schwenkachse (a5) ausgebildet ist.

9. Spannschloss nach Anspruch 7 oder 8, **dadurch gekennzeichnet, dass** das keilförmige Haltestück (55) zweiteilig ausgeführt ist, wobei der zumindest eine Endabschnitt (6) zwischen den beiden Teilen (551, 552) geführt und dort festklemmbar ist, und der Schiebeabschnitt (56) an einem (551) der beiden Teile angreift.

10. Spannschloss nach Anspruch 9, **dadurch gekennzeichnet, dass** jeder Teil des keilförmigen Haltestückes (55) eine geneigte Außenfläche (552, 554) besitzt, die je mit einer zugeordneten, gehäusefesten Auflauffläche (513, 514) zusammenwirkt, und die Keilform des Haltestückes (55) in Zugrichtung des zumindest einen Endabschnittes (6) zuläuft.

11. Spannschloss nach Anspruch 10, **dadurch gekennzeichnet, dass** zwei keilförmige Haltestücke (75, 76) über ein Umlenkgelenk (72) gegenläufig verschiebbar gekoppelt sind, wobei der Schiebeabschnitt (56) an einem (75) der Haltestücke angreift und zwischen den beiden Haltestücken ein Klemmbacken (73) liegt, wobei bei einem Verschwenken des Massestücks unter Fliehkrafteinfluss jedes Haltestück einen von zwei Endabschnitten (6, 7) gegen den Klemmbacken klemmt.

12. Spannschloss nach einem der Ansprüche 1 bis 3, **dadurch gekennzeichnet, dass** das zumindest eine Haltestück (100, 100') verschiebbar an dem Massestück angeordnet ist, und durch ein Zusammenwirken des zumindest einen Haltestücks mit zumindest einem ortsfest in dem Gehäuse angeordneten Verschiebelement (110,110') der zumindest eine Endabschnitt des Zugelementes blockierbar ist, wobei der zumindest eine Endabschnitt (120, 130) in einer Blockierposition zwischen dem zumindest einen Haltestück (100, 100') und der Achse (a10) eingeklemmt ist.

13. Spannschloss nach Anspruch 12, **dadurch gekennzeichnet, dass** das zumindest eine Verschiebeelement (110, 110') eine keilförmige Auflauffläche für das zumindest eine Haltestück (100, 100') aufweist und das zumindest eine Haltestück (100, 100') als Zahnrad ausgebildet ist, wobei die Auflauffläche des korrespondierenden Verschiebelements (110, 110') eine entsprechend gezahnte Oberfläche aufweist.

14. Spannschloss nach einem der Ansprüche 1 bis 13, **dadurch gekennzeichnet, dass** das Zugelement (5) eine Profilierung (32, 33a, 33b) aufweist, welche mit dem Haltestück (15, 25, 45) formschlüssig im Sinne eines Blockierens in der Haltestellung zusammenwirkt.

15. Spannschloss nach einem der Ansprüche 1 bis 14, **dadurch gekennzeichnet, dass** das Zugelement (5) als flexibles Seil ausgebildet und/oder von einem Schutzschlauch (30) umhüllt ist.

## Claims

1. A turnbuckle (4) for securing two wire-shaped end sections (6, 7) of a lateral strand (3) of an antiskid chain (1) for a vehicle wheel, said strand having a tensioning element (5), which turnbuckle comprises a housing (11, 21, 41) in which at least one displaceable gripping element (15, 25, 45) is accommodated, at least one of said wire-shaped end sections being temporarily lockable in position by means of the at least one gripping element, **characterized in that** there is provided in said housing (11, 21, 41) a displaceable mass piece (12, 22, 42), which mass piece is at least partly displaced radially outwardly under the action of centrifugal force upon rotation of the wheel, starting from a neutral position when the wheel is at a standstill, which displacement causes said at least one end section (6, 7) of said tensioning element to be locked in position.

2. The turnbuckle as defined in claim 1, **characterized in that** one end section of said tensioning element is guided through the housing and through a passage (16, 17, 26, 27, 46) in said at least one gripping element, so that a canting displacement of said gripping element relative to said at least one wire-shaped end section causes temporary locking thereof.

3. The turnbuckle as defined in claim 1 or claim 2, **characterized in that** said mass piece (12, 22, 42) is spring biased in its neutral position (19).

4. The turnbuckle as defined in any one of claims 1 to 3, **characterized in that** said mass piece (12, 42) is eccentrically mounted for rotation about an axis (a1, a4) and is in the form of an angled lever with arms (13,14) of unequal length, the longer arm (13) extending in approximately tangential direction within said housing (11, 41), while the shorter leg (14), configured as a gripping element (15), has at least one passage (16, 17, 46) for accommodation of said at least one end section (6, 7) of said tensioning element.

5. The turnbuckle as defined in any one of claims 1 to 3, **characterized in that** in said housing (21) a gripping element (25) separate from said rotatable mass piece (22) is mounted for rotation and is kinematically connected to said mass piece (12) such that swiveling of said mass piece from its neutral position leads to swiveling of said separate gripping element from its neutral position and thus to a canting movement thereof with reference to said at least one end section of said tensioning element (5).

6. The turnbuckle as defined in any one of claims 1 to 5, **characterized in that** said at least one end section (6, 7) of said tensioning element (5) is guided in a through bore (26, 27, 46) of said gripping element (25, 45) or in a groove (16, 17) open toward an edge of said gripping element.

7. The turnbuckle as defined in any one of claims 1 to 3, **characterized in that** said gripping element (55) is wedge-shaped, displaceable and designed to be braced against at least one slide-in surface (513, 514) of said housing (51), and said displaceable mass piece (52) is slewable and has a sliding portion (56) in the region of its swivel axis (a5), which sliding portion displaces, on swiveling of the mass piece due to centrifugal force, said wedge-shaped gripping element (55) so as to lock said at least one end section (6) guided along a clamping surface of said gripping element.

8. The turnbuckle as defined in claim 7, **characterized in that** said sliding portion (56) is situated between two engaging edges (53, 54) of said wedge-shaped gripping element (55), such that, as it engages one such edge, it can push said gripping element so as to effect clamping, or release, thereof, and said sliding portion (56) is cam-shaped and is mounted eccentrically with regard to said swivel axis (a5).

9. The turnbuckle as defined in claim 7 or claim 8, **characterized in that** said wedge-shaped gripping element (55) consists of two parts (551, 552) and said at least one end section (6) is guided between said two parts and can be locked therebetween, and the sliding portion (56) engages one (551) of said two parts.

10. The turnbuckle as defined in claim 9, **characterized in that** each part of said wedge-shaped gripping element (55) has an inclined external surface (552, 554) which interacts with an assigned slide-in surface (513, 514) secured to the housing, and the wedge shape of the gripping element (55) points in the tensioning direction of said at least one end section (6).

11. The turnbuckle as defined in claim 10, **characterized in that** two wedge-shaped gripping elements (75, 76) are displaceably coupled counterrotatingly by means of an idler joint (72) wherein said sliding portion (56) engages one (75) of said gripping elements and a clamping jaw (73) is disposed between said two gripping elements, and when said mass piece swings under the action of centrifugal force, each gripping element clamps one of two end sections (6, 7) against said clamping jaw.

12. The turnbuckle as defined in any one of claims 1 to 3, **characterized in that** said at least one gripping element (100, 100') is displaceably attached to said mass piece, and said at least one end section of said tensioning element is capable of being locked in position by the interaction between said at least one gripping element and at least one slide element (110, 110') immovably fixed to said housing, and said at least one end section (120, 130) is jammed, in a locking position, between said at least one gripping element (100, 100') and said axis (a10).

13. The turnbuckle as defined in claim 12, **characterized in that** said at least one slide element (110, 110') has a wedge-shaped slide-in surface for said at least one gripping element (100, 100') and said at least one gripping element (100, 100') is configured as a gearwheel, the slide-in surface of the corresponding slide element (110, 110") having a correspondingly toothed surface.

14. The turnbuckle as defined in any one of claims 1 to 13, **characterized in that** said tensioning element (5) has ribbing (32, 33a, 33b) which positively interacts with the gripping element (15, 25, 45) to achieve locking in the holding position.

15. The turnbuckle as defined in any one of claims 1 to 14, **characterized in that** said tensioning element (5) is configured as a flexible rope and/or is enveloped by a protective hose (30).

## Revendications

1. Tendeur (4) pour la fixation de deux tronçons d'extrémité (6, 7) en forme de fil d'un lien latéral (3), muni d'un élément de traction (5), d'une chaîne à neige (1) pour une roue d'un véhicule, comportant un boîtier (11, 21, 41) dans lequel est logée au moins une pièce de fixation (15, 25, 45) mobile, au moins l'un des tronçons d'extrémité en forme de fil pouvant être fixé provisoirement au moyen de ladite au moins une pièce de fixation, **caractérisé en ce que** dans le boîtier (11, 21, 41) est disposée une pièce massive (12, 22, 42) mobile, laquelle peut être amenée, hors d'une position de repos dans laquelle la roue est immobilisée, au moins par zones radialement vers l'extérieur sous l'effet de la force centrifuge lors de la rotation de la roue, et ce mouvement induit un blocage dudit au moins un tronçon d'extrémité (6, 7) de l'élément de traction.

2. Tendeur selon la revendication 1, **caractérisé en ce qu'**un tronçon d'extrémité de l'élément de traction est guidé à travers le boîtier et un passage (16, 17, 26, 27, 46) de ladite au moins une partie de fixation, sachant qu'un mouvement de basculement de la pièce de fixation par rapport audit au moins un tronçon d'extrémité en forme de fil entraîne la fixation provisoire de ce dernier.

3. Tendeur selon la revendication 1 ou 2, **caractérisé en ce que** la pièce massive (12, 22, 42) est sollicitée par un ressort (19) dans sa position de repos.

4. Tendeur selon l'une quelconque des revendications 1 à 3, **caractérisé en ce que** la pièce massive (12, 42) est montée pour pouvoir pivoter de manière excentrée autour d'un axe (a1, a4) et est réalisée sous forme de levier angulaire avec des branches (13, 14) de longueur différente, la branche (13) la plus longue s'étendant à peu près tangentiellement à l'intérieur du boîtier (11, 41) et la branche (14) la plus courte, réalisée sous forme de pièce de fixation (15), comportant au moins un passage (16, 17, 46) pour ledit au moins un tronçon d'extrémité (6, 7) de l'élément de traction.

5. Tendeur selon l'une quelconque des revendications 1 à 3, **caractérisé en ce qu'**une pièce de fixation (25), séparée de la pièce massive (22) pivotante, est montée pivotante dans le boîtier (21) et est reliée cinématiquement à la pièce massive (12), de telle sorte qu'un pivotement de la pièce massive hors de sa position de repos entraîne un pivotement de la pièce de fixation séparée hors de sa position de repos et donc un mouvement de basculement par rapport audit au moins un tronçon d'extrémité de l'élément de traction (5).

6. Tendeur selon l'une quelconque des revendications 1 à 5, **caractérisé en ce que** ledit au moins un tronçon d'extrémité (6, 7) de l'élément de traction (5) est guidé dans une forure débouchante (26, 27, 46) de la pièce de fixation (25, 45) ou dans une rainure (16, 17) ouverte vers un bord de la pièce de fixation.

7. Tendeur selon l'une quelconque des revendications 1 à 3, **caractérisé en ce que** la pièce de fixation (55) est réalisée en forme de clavette, apte à se déplacer et pouvant prendre appui contre au moins une surface de contact (513, 514) du boîtier (51), et la pièce massive (52) mobile est apte à pivoter et, dans la zone de son axe de pivotement (a5), possède un tronçon de décalage (56) qui, lors d'un pivotement de la pièce massive sous l'effet de la force centrifuge, décale la pièce de fixation (55) en forme de clavette dans le sens d'un blocage dudit au moins un tronçon d'extrémité (6), guidé sur une surface de blocage de la pièce de fixation.

8. Tendeur selon la revendication 7, **caractérisé en ce que** le tronçon de décalage (56) est situé entre deux flancs d'attaque (53, 54) de la pièce de fixation (55) en forme de clavette, de telle sorte que ledit tronçon de décalage peut décaler, en entrant en contact avec respectivement un flanc, la pièce de fixation tant dans le sens d'un blocage que dans le sens d'une désolidarisation dudit au moins un tronçon d'extrémité (6), et le tronçon de décalage (56) est réalisé en forme d'ergot, excentré par rapport à l'axe de pivotement (a5).

9. Tendeur selon la revendication 7 ou 8, **caractérisé en ce que** la pièce de fixation (55) en forme de clavette est réalisée en deux parties, sachant que ledit au moins un tronçon d'extrémité (6) est logé entre les deux parties (551, 552) et y est bloqué, et le tronçon de décalage (56) entre en contact avec l'une (551) des deux parties.

10. Tendeur selon la revendication 9, **caractérisé en ce que** chaque partie de la pièce de fixation (55) en forme de clavette possède une face extérieure (552, 554) inclinée, qui coopère chacune avec une surface de contact (513, 514) associée, solidaire du boîtier, et la forme de clavette de la pièce de fixation (55) se rétrécit dans la direction de traction dudit au moins un tronçon d'extrémité (6).

11. Tendeur selon la revendication 10, **caractérisé en ce que** deux pièces de fixation (75, 76) en forme de clavette sont couplées par l'intermédiaire d'une articulation de renvoi (72) de manière à pouvoir se déplacer dans le sens opposé, le tronçon de décalage (56) entrant en contact avec l'une (75) des pièces de fixation et un mors de serrage (73) étant situé entre les deux pièces de fixation, sachant que lors d'un pivotement de la pièce massive sous l'effet de la force centrifuge, chaque pièce de fixation bloque l'un des deux tronçons d'extrémité (6, 7) contre le mors de serrage.

12. Tendeur selon l'une quelconque des revendications 1 à 3, **caractérisé en ce que** ladite au moins une pièce de fixation (100, 100') est disposée de manière à pouvoir se déplacer sur la pièce massive, et, sous l'effet d'une coopération entre ladite au moins une pièce de fixation et ledit au moins un élément de décalage (110, 110'), disposé dans le boîtier, ledit au moins un tronçon d'extrémité de l'élément de traction peut être bloqué, ledit au moins un tronçon d'extrémité (120, 130) étant serré dans la position de blocage entre ladite au moins une pièce de fixation (100, 100') et l'axe (a10).

13. Tendeur selon la revendication 12, **caractérisé en ce que** ledit au moins un élément de décalage (110, 110') comporte une surface de contact en forme de clavette pour ladite au moins une pièce de fixation (100, 100') et ladite au moins une pièce de fixation (100, 100') est réalisée sous la forme d'une roue dentée, la surface de contact de l'élément de décalage (110, 110') correspondant comporte une surface dentée correspondante.

14. Tendeur selon l'une quelconque des revendications 1 à 13, **caractérisé en ce que** l'élément de traction (5) comporte un profilage (32, 33a, 33b), qui coopère avec la pièce de fixation (15, 25, 45) par conjugaison de forme dans le sens d'un blocage dans la position de fixation.

15. Tendeur selon l'une quelconque des revendications 1 à 14, **caractérisé en ce que** l'élément de traction (5) est réalisé sous la forme d'un câble flexible et/ou est entouré par un tuyau flexible de protection (30).
